(19) Europäisches Patentamt
European Patent Office
Office européen des brevets

(11) **EP 0 827 603 B1**

(12) **EUROPÄISCHE PATENTSCHRIFT**

| | |
|---|---|
| (45) Veröffentlichungstag und Bekanntmachung des Hinweises auf die Patenterteilung:<br>**17.10.2001 Patentblatt 2001/42** | (51) Int Cl.[7]: **G05B 19/33**, G01D 5/245 |
| (21) Anmeldenummer: **96946209.2** | (86) Internationale Anmeldenummer:<br>**PCT/DE96/02445** |
| (22) Anmeldetag: **18.12.1996** | (87) Internationale Veröffentlichungsnummer:<br>**WO 97/35242 (25.09.1997 Gazette 1997/41)** |

(54) **NACHLAUFERFASSUNG VON ELEKTRISCHEN VERSTELLMOTOREN**

TRACKING DETECTION SYSTEM OF ELECTRICAL SERVOMOTORS

SYSTEME DE DETECTION POUR LA POURSUITE DE SERVOMOTEURS ELECTRIQUES

| | |
|---|---|
| (84) Benannte Vertragsstaaten:<br>**DE ES FR GB IT** | (73) Patentinhaber: **ROBERT BOSCH GMBH**<br>**70442 Stuttgart (DE)** |
| (30) Priorität: **19.03.1996 DE 19610626** | (72) Erfinder: **AAB, Volker**<br>**D-77839 Lichtenau (DE)** |
| (43) Veröffentlichungstag der Anmeldung:<br>**11.03.1998 Patentblatt 1998/11** | (56) Entgegenhaltungen:<br>**EP-A- 0 365 736    US-A- 5 323 309** |

EP 0 827 603 B1

**Beschreibung**

Stand der Technik

Die Erfindung geht aus von einer Nachlauferfassung von elektrischen Verstellmotoren mit inkrementaler Positionserfassung, insbesondere bei Verstellmotoren in Kraftfahrzeugen, der im Oberbegriff des Anspruchs 1 definierten Gattung.

Aus der EP 0 603 506 A2 ist ein Verfahren zur Lagebestimmung eines elektromotorisch in zwei Richtungen angetriebenen Teils von Kraftfahrzeugen bekannt. Mit Hilfe eines Zählers werden beim Bewegen des Teils in seine beiden Richtungen Zählimpulse eines Stellungsgebers in den Zähler zum Verringern bzw. Erhöhen des Zählstandes entsprechend der vorgegebenen Bewegung eingegeben. Nach Abschalten des Antriebsmotors werden die vom Stellungsgeber gelieferten Impulse in ihrem zeitlichen Abstand vom Abschaltzeitpunkt analysiert und einer Weiterbewegung des Zählers zugeordnet, wenn der Abstand der Impulse nach dem Umpolen sich wieder verkleinert.

Bei diesem bekannten Verfahren ist nichts über Maßnahmen ausgesagt, die eine Nachlauferfassung bei Unterspannungsbedingungen und gleichzeitiger Einsparung von Versorgungsenergie für die Positionserfassung und-auswertung ermöglichen.

In D1 (US 5,323,309) ist eine Positionserfassung von Roboterarmen beschrieben, wobei jeder Freiheitsgrad des Roboterarms eine separate Positionserfassung mit unabhängiger Spannungsversorgung aufweist, die im normalen Betrieb parallel zu einem Servocontroler arbeiten. Es wird dort vorgeschlagen (Spalte 17, Zeile 5 bis Spalte 18, Zeile 40), daß je nach Bewegung des Roboterarms durch einen Quadranten von einer hohen Samplingrate auf eine niedrige Samplingrate umgeschaltet werden kann, um Energie zu sparen. Zwischen den hohen und niedrigen Samplingraten wird umgeschaltet, wenn sich der Arm bewegt bzw. wenn er ruht. Hierzu ist es notwendig von außen auf den Mikrocontroler einzuwirken.

Vorteile der Erfindung

Die erfindungsgemäße Nachlauferfassung von elektrischen Verstellmotoren mit den kennzeichnenden Merkmalen des Anspruchs 1 hat demgegenüber den Vorteil der Stromeinsparung bei der verwendeten inkrementalen Positionserfassung und Positionsauswertung, so daß im Fall von Unterspannungsbedingungen die notwendige Pufferkapazität der

Motorelektronik klein gewählt werden kann und gegebenenfalls leichter in sie eingebaut werden kann.

Gemäß der Erfindung wird dies prinzipiell dadurch erreicht, daß zur Positionserfassung ein Mikrocontroller mit Selbstweckvorrichtung vorgesehen ist, der zur Verminderung der mittleren Stromaufnahme von einem aktiven Betriebszustand in einen inaktiven Betriebszustand versetzbar ist und nach einer vorher bestimmten Zeitspanne selbsttätig wieder in den aktiven Betriebszustand versetzbar ist, daß der Mikrocontroller die Positionssignale von Positionsgebern zu bestimmten Abtastzeitpunkten abfragt, daß der Mikrocontroller zwischen den notwendigen Abtastzeitpunkten abfragt, daß der Mikrocontroller zwischen den notwendigen Abtastzeitpunkten für eine bestimmte, berechnete Zeitspanne in den aktiven Betriebszustand versetzt wird, und daß die bestimmte, berechnete Zeitspanne von einem detektierten Flankenwechsel des Positionssignals an berechnet wird.

Durch die in den weiteren Ansprüchen niedergelegten Maßnahmen sind vorteilhafte Weiterbildungen und Verbesserungen der im Anspruch 1 angegebenen Nachlauferfassung möglich.

Der Erfindung liegt die Aufgabe zugrunde eine Nachlauferfassung zu schaffen, die bei einem Ausfall des Bordnetzes eines Kraftfahrzeugs während beispielsweise ein Fensterheberantrieb noch in Betrieb ist, das beim Nachlauf des Fensters trotz des ausgefallenen Bordnetzes - d. h. ohne Versorgungsspannung - der Mikrocontroller die Position ordnungsgemäß abtastet und abspeichert. Die Lösung gelingt mit einer Nachlauferfassung mit den Merkmalen des Hauptanspruchs Gemäß einer ersten vorteilhaften Ausführungsform der Erfindung ist vorgesehen, daß die Berechnung der bestimmten, berechneten Zeitspanne für die der Mikrokontroller im inaktiven Betriebszustand ist, von jedem detektierten Flankenwechsel des Positionssignals aus an berechnet wird, wobei berücksichtigt wird, daß das durch Abruftechnik ermittelte Positionssignalintervall aufgrund der zeitdiskreten Abtastung um ein Abtastintervall kleiner sein kann als der wirkliche Wert.

In zweckmäßiger Weiterbildung dieser Ausführungsform ist vorgesehen, daß die Berechnung der bestimmten, berechneten Zeitspanne für die der Mikrokontroller im inaktiven Betriebszustand ist, nach folgender Formel erfolgt

$$t_{Sleep\_neu} = \begin{cases} (N_{HF}-1)\,t_{Sleep\_alt} + (N_{HF}-2)\,t_{Run} & N_{HF} \geq 2 \\ \\ t_{Sleep\_alt} & N_{HF} < 2 \end{cases}$$

wobei

$N_{HF}$ die Anzahl der Abtastzeitpunkte seit letztem Flankenwechsel der als Positionsgeber verwendeten Hallsensoren bedeutet,

$t_{Sleep\_neu}$ das neue Intervall, in dem der Mikrokontroller im inaktiven Betriebszustand ist,

$t_{Sleep\_alt}$ das aktuelle Intervall, in dem der Mikrokontroller im inaktiven Betriebszustand ist,

$t_{Run}$ das Intervall, in dem der Mikrokontroller im aktiven Betriebszustand ist,

bedeuten,

und angenommen ist, daß eine zweifache Abtastung erfolgt.

Entsprechend einer zweiten sehr vorteilhaften Ausführungsform der erfindungsgemäßen Nachlauferfassung erfolgt die Berechnung der bestimmten, berechneten Zeitspanne für die der Mikrokontroller im inaktiven Betriebszustand ist, derart, daß ausgehend von einem ersten Abtastzeitpunkt und einem ersten Abtastzeitintervall die folgenden Abtastzeitpunkte so bestimmt werden, daß sich die nachfolgenden Abtastzeitpunkte solange verdoppeln, bis ein Flankenwechsel des Positionssignals detektiert wird.

In weiterer zweckmäßiger Ausgestaltung dieser alternativen Ausführungsform der Erfindung beginnt bei demjenigen Zeitpunkt, bei welchem der Flankenwechsel detektiert wird, die Prozedur der Verdopplung der Abtastzeitpunkte erneut, bis der nächste Flankenwechsel erreicht ist, wobei der Startwert für das erste Abtastzeitintervall nach dem ersten Flankenwechsel das vorletzte Abtastzeitintervall ist.

In besonders vorteilhafter Weise wird bei der erfindungsgemäßen Nachlauferfassung die bestimmte, berechnete Zeitspanne, in welcher der Mikrokontroller im inaktiven Betriebszustand ist, durch Subtraktion der Zeit berechnet, die für die Erfassung der Positionssignale angenommen wird, von der Zeit des Abtastintervalls.

In besonders zweckmäßiger Ausgestaltung der Erfindung besitzt der verwendete Mikrokontroller einen niederfrequenter Oszillator, ist im Mikrokontroller eine Schaltung vorgesehen, die aus der niedrigen Frequenz dieses Oszillators eine wesentlich höhere Taktfrequenz für den Mikrokontrollerkern generiert, ist der Oszillator als originäres Bauelement in den Mikrokontroller mitintegriert, und ist eine Unterspannungserkennung vorgesehen, deren Ausgangssignal unmittelbar dem Mikrokontrollerkern zuführbar ist.

Eine vorteilhafte Weiterbildung dieser besonderen Ausgestaltung der Erfindung sieht vor, daß der Mikrokontroller mit einer Zeitschaltlogik versehen ist, welche nach Ablauf einer verschieden vorgebbaren Zeitspanne eine Weckschaltung beaufschlagt, damit diese den Mikrokontrollerkern von dem inaktiven in den aktiven Betriebszustand versetzt.

Zeichnung

Die Erfindung ist anhand mehrerer in der Zeichnung dargestellter Ausführungsbeispiele in der nachfolgenden Beschreibung näher erläutert. Es zeigen:

Fig. 1     ein Zeitdiagramm, das den Zusammenhang von aktivem und inaktivem Betriebszustand nach Unterspannungserkennung in zwei verschiedenen Maßstäben zeigt sowie die zeitliche Zuordnung zu den Positionssignalen;

Fig. 2     ein Impulsdiagramm eines ersten Ausführungsbeispiels mit zugehörigen Abtastzeitfenstern in der oberen Zeile und zwei um 90° elektrisch gegeneinander versetzten Positionssignalen in der mittleren und der unteren Zeile;

Fig. 3     schematisch ein Impulsdiagramm zur Erläuterung der Festlegung der Abtastzeitfenster nach dem zweiten Ausführungsbeispiel der Erfindung, und

Fig. 4 ein Impulsdiagramm der zweiten Ausführungsbeispiels mit den zugehörigen Abtastzeitfenstern in der oberen Zeile und zwei um 90° elektrisch gegeneinander versetzten Positionssignalen in der mittleren und der unteren Zeile.

Beschreibung der Ausführungsbeispiele

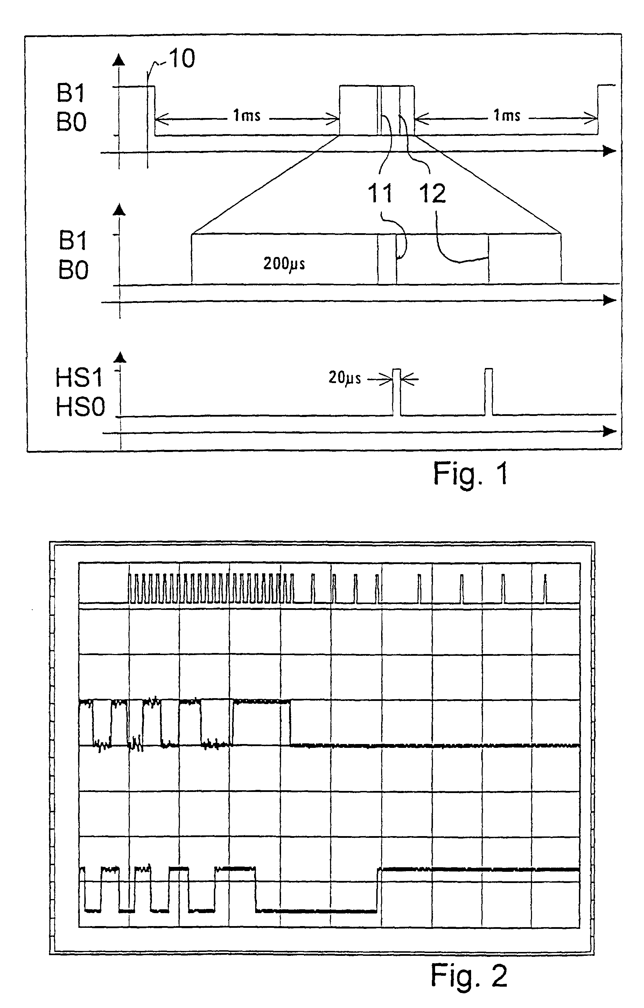

In Fig. 1 ist ein Zeitdiagramm dargestellt, das den Zusammenhang von aktivem B1 und inaktivem Betriebszustand B0 nach Erkennung einer Unterspannungsbedingung 10 in zwei verschiedenen Maßstäben zeigt sowie die zeitliche Zuordnung zu Positionssignalen HS, die bevorzugt von Hallsensoren geliefert werden und zwar zwei um 90° elektrisch versetzte. Das Vorhandensein eines Positionssignal HS ist in der unteren Zeile von Fig. 1 mit HS1 und das Nichtvorhandensein mit HS0 bezeichnet.

Dieses Ausführungsbeispiel sowie das zweite später noch beschriebene Ausführungsbeispiel soll zum besseren Verständnis anhand einer besonderen Anwendung vorliegender Erfindung erläutert werden.

Bei elektrischen Verstellantrieben in Kraftfahrzeugen wird oft eine Positionserfassung mittels Inkrementalgebern eingesetzt. Dazu können z.B. Hallsensoren diesen. Solche Antriebe mit Positionserfassung sind beispielsweise bei elektrischen Fensterhebern mit Einklemmschutz, Schiebedächern und Sitzverstellungen mit Memory-Funktion im Einsatz. Für derartige Systeme soll die Positionserfassung auch nach einer Notabschaltung infolge von Unterspannung, insbesondere durch Abklemmen der Batterie oder Ansprechen einer Fahrzeugsicherung während des Verstellvorgangs, noch realisierbar sein. Die Nachlaufzeit eines typischen Verstellmotors kann bis zu 100 ms betragen. Da anschließend noch die Positionsdaten in einen nicht flüchtigen Speicher geschrieben werden müssen, muß das System, bestehend aus in den Figuren nicht näher dargestelltem Mikrokontroller und Sensorik für Pufferzeiten von ca. 120 ms aus einer Kapazität gespeist werden.

Die minimale Bordnetzspannung, bei welcher die Antriebe noch angesteuert werden, beträgt üblicherweise 9 V. Für die Verpoldiode und den Spannungsabfall an einen Spannungsregler muß mit ca. 1,2 V gerechnet werden. Die minimale Funktionsspannung für Hallsensoren, die zur Positionserfassung dienen, und Mikrokontroller liegt bei ca. 3,8 V. Daraus resultiert ein zulässiger Spannungabfall an der Pufferkapazität von

$$\Delta U = 9\ V - 1{,}2\ V - 3{,}8\ V = 4\ V.$$

Bei Annahme von 30 mA Gesamtstromverbrauch für dieses System ergibt sich damit eine Mindestgröße für die Pufferkapazität von

$$C = \frac{I \cdot \Delta t}{\Delta U} = \frac{30\ mA \cdot 120\ ms}{4\ V} = 900\ \mu F.$$

Kondensatoren dieser Kapazität sind aufgrund ihrer großen Abmessungen nur sehr schwer in den üblichen Motorsteuerelektroniken zu integrieren.

Um die mittlere Stromaufnahme des Systems zu reduzieren, werden der Mikrokontroller und die Hallsensoren nur noch zeitweise eingeschaltet, um die Sensorpegel abzutasten. Zu diesem Zweck kann bevorzugt ein Mikrokontroller Verwendung finden, der in der gleichzeitig eingereichten Anmeldung "Mikrokontroller mit Selbstweckvorrichtung" der Anmelderin beschrieben ist und die folgenden Anforderungen erfüllt:

der Mikrokontroller besitzt einen stromsparenden inaktiven Betriebszustand (power down oder sleep mode) ;
die Anlaufzeit des Mikrokontrollers ist deutlich kleiner als das zu erwartende Abtastzeitintervall;
der Mikrokontroller enthält eine Unterspannungserkennung, die beispielsweise als Schwellwerterfassung unmittelbar an die Bordnetzspannung angeschlossen ist, und damit die Unterspannungsbedingung ohne Zeitverzug feststellt und dem Mikrokontrollerkern unmittelbar mitteilt;
schließlich wird nach Ablauf einer bestimmten Zeit nach Eintritt in den inaktiven Betriebszustand der Mikrokontroller durch seine Selbsweckvorrichtung wieder in den aktiven Betriebszustand (run mode) versetzt.

Beim Nachlauf bzw. Auslauf gebremster Gleichstrommotoren kann davon ausgegangen werden, daß die Drehzahl des Motors monoton abnimmt. Daraus ergibt es sich, daß die Zeitintervalle von aufeinander folgenden Positionssignalen, wie z.B. die Hallsensorimpulse, immer größer werden. Die Drehzahl des Motors kann zum Zeitpunkt der Abschaltung bzw. des Auftritts der Unterspannungsbedingung sehr groß sein, beispielsweise die Leerlaufdrehzahl bei erhöhter Bordnetzspannung. Daher müssen die Hallsensorausgangssignale in sehr kurzen Zeitabständen abgetastet und eingelesen werden. Mit abnehmender Drehzahl kann das Zeitintervall zwischen zwei aufeinander folgenden Abtastungen und Auswertvorgängen vergrößert werden. Im Zeitdiagramm der Fig. 1 ist ein Beispiel für den zeitlichen Ablauf der Erfassung der Hallsensorsignale dargestellt. Die Abtastungsintervalle sind so gewählt, daß sie kleiner sind als die Zeit zwischen zwei einander folgenden Hallsensorflanken. Mit den üblichen Motoren, bei denen die Drehzahl < 100/s ist, ergibt sich damit ein Abtastintervall von $\approx$ 1,5 ms. Innerhalb dieser Zeit muß der Mikrokontroller aus seinem inaktiven Betriebszustand erwachen und die Hallsensorsignale erfassen. Die Zeitspanne für den inaktiven Betriebszustand ist demnach kürzer und kann, wie in Fig. 1 dargestellt, beispielsweise 1 ms betragen.

Wenn die Unterspannungsbedingung vom Mikrokontroller detektiert wird, angedeutet durch das Bezugszeichen 10 in Fig. 1, werden die Motorrelais abgeschaltet und der Motor gebremst. Gleichzeitig wird die Erfassung der Hallsensorsignale von Ereignissteuerung auf Abruftechnik (polling) umgeschaltet. Anschließend wird im Mikrokontroller eine Zeitschaltlogik aktiviert und mit der Zeitspanne des inaktiven Betriebszustands, beispielsweise 1 ms, geladen. Danach wird der Mikrokontroller sofort in den inaktiven Betriebszustand geschaltet. Die Zeitschaltlogik arbeitet nun mit niedriger Frequenz von z.B. 100 kHz. Nachdem der Mikrokontroller nach Ablauf seiner Schlafzeit von der Zeitschaltlogik über die Weckschaltung selbsttätig geweckt wurde, benötigt der als hochfrequenter Taktgeber verwendete Phasenregelkreis etwa 200 µs, bis der Mikrokontroller seinen stabilen Systemtakt zur Verfügung stellt. Anschließend werden die Sensorsignale mit einer ersten Abtastung 11 erfaßt und zum Zwecke der Entprellung nach 100 µs mit einer zweiten Abtastung 12 nochmals eingelesen.

Liegen zwischen zwei Zustandswechseln der Ausgangssignale der Hallsensoren mehrere Abtastintervalle, so wird die Zeitspanne des inaktiven Betriebszustands, die Schlafenszeit, und damit die Länge des Abtastintervalls, vergrößert.

Gemäß dem ersten Ausführungsbeispiel der Erfindung wird die neue Zeitspanne für den inaktiven Betriebszustand gemäß nachfolgender Formel bestimmt:

$$t_{Sleep\_neu} = \begin{cases} \left| (N_{HF}-1)\, t_{Sleep\_alt} + (N_{HF}-2)\, t_{Run} \right| & N_{HF} \geq 2 \\ \\ t_{Sleep\_alt} & N_{HF} < 2 \end{cases}$$

wobei

$N_{HF}$ die Anzahl der Abtastzeitpunkte seit letztem Flankenwechsel der als Positionsgeber verwendeten Hallsensoren bedeutet,
$t_{Sleep\_neu}$ das neue Intervall, in dem der Mikrokontroller im inaktiven Betriebszustand ist,
$t_{Sleep\_alt}$ das aktuelle Intervall, in dem der Mikrokontroller im inaktiven Betriebszustand ist,
$t_{Run}$ das Intervall, in dem der Mikrokontroller im aktiven Betriebszustand ist,
bedeuten,
und angenommen ist, daß eine zweifache Abtastung erfolgt.

Bei dieser ersten Ausführungsform wird die neue Schlafenszeit $t_{Sleep\_neu}$ jeweils nach Detektierung eines Flankenwechsels bestimmt. Bei der Berechnung wird berücksichtigt, daß das durch die Abtastung ermittelte Hallsensorintervall aufgrund der zeitdiskreten Abtastung um ein Abtastintervall kleiner sein kann als der wirkliche Wert.

In Fig. 2 ist das Impulsdiagramm dieses ersten Ausführungsbeispiels mit zugehörigen Abtastzeitfenstern in der oberen Zeile und zwei um 90° elektrisch gegeneinander versetzten Positionssignalen in der mittleren und der unteren Zeile dargestellt. Die in der oberen Zeile dargestellten Abtastzeitfenster sind gemäß obiger Formel an den Flanken der Hallsensorsignale orientiert. Es zeigt sich sehr deutlich die Zunahme der Schlafenszeit, in welcher der Mikrokontroller im inaktiven Betriebszustand ist, und die Zunahme der Abtastzeitintervalle.

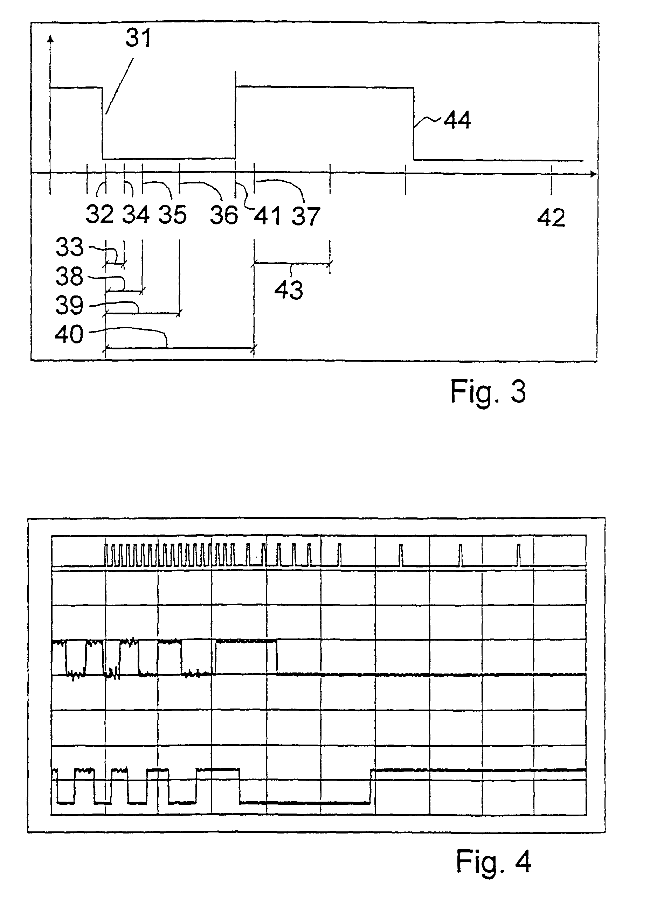

Gemäß einem zweiten Ausführungsbeispiel der Erfindung kann die Länge des inaktiven Betriebszustands auf eine alternative Weise ermittelt werden. Dies wird im Zusammenhang mit der Darstellung in Fig. 3 erläutert. In der Fig. 3 ist ein Hallsensorsignal 31 dargestellt. Ausgehend von einem ersten Abtastzeitpunkt 32, der unmittelbar nach einem Flankenwechsel liegt, und einem ersten Abtastzeitintervall 33 werden die folgenden Abtastzeitpunkte 34, 35, 36, 37 so bestimmt, daß sich die Abtastzeitintervalle 38, 39, 40, bezogen auf den ersten Abtastzeitpunkt 1 und das zugehörige erste Abtastzeitintervall 2, solange verdoppeln, bis mit 41 ein Flankenwechsel detektiert wird.

Bei demjenigen Abtastzeitpunkt 37, bei dem der Flankenwechsel 41 detektiert wird, beginnt die Prozedur der Verdopplung der Abtastzeitpunkte bzw. der Abtastzeitintervalle erneut, bis der nächste Flankenwechsel 44 des Positionssignals z. B. mit dem Abtastzeitpunkt 42 festgestellt wird. Startwert für das erste Abtastzeitintervall 43 nach dem ersten Flankenwechsel 41 ist das vorletzte Abtastintervall 39. Wird der nächste Flankenwechsel 44 zum Abtastzeitpunkt 42 detektiert, so wird wieder wie beim letzten Flankenwechsel 41 mit dem zugehörigen detektierenden Abtastzeitpunkt 37 vorgegangen. Das Startintervall für die Bestimmung der Abtastzeitpunkte nach dem Flankenwechsel 44 ist das Abtastintervall 43.

Die Länge der Zeitspanne für den inaktiven Betriebszustand, die Schlafzeit, ergibt sich aus der Länge des Abcastintervalls vermindert um diejenige Zeit, die für die Erfassung der Hallsensorsignale angenommen wird, was der Zeitspanne des aktiven Betriebszustands, der Lauf- oder Run-Zeit, des Mikrokontrollers entspricht. Die sich dabei jeweils ergebenden Zeitwerte werden in die Zeitschaltlogik des Mikrokontrollers eingestellt, damit dieser nach Ablauf der jeweiligen Zeitspanne über die Weckschaltung selbsttätig wieder geweckt wird.

In Fig. 4 ist das Impulsdiagramm dieses zweiten Ausführungsbeispiels mit zugehörigen Abtastzeitfenstern in der oberen Zeile und zwei um 90° elektrisch gegeneinander versetzten Positionssignalen in der mittleren und der unteren Zeile dargestellt. Die in der oberen Zeile dargestellten Abtastzeitfenster bzw. -intervalle sind gemäß obiger Formel an den Flanken der Hallsensorsignale orientiert. Es zeigt sich sehr deutlich die Zunahme der Schlafenszeit, in welcher der Mikrokontroller im inaktiven Betriebszustand ist, und die Zunahme der Abtastzeitintervalle.

Ein Vergleich der in Fig. 2 und in Fig. 4 ermittelten Anzahl der Abtastzeitfenster, jeweils in der oberen Zeile dargestellt, zeigt, daß bei dem Verfahren nach dem zweiten Ausführungsbeispiel, bei gleicher Konstellation der Positionssignale, erheblich weniger Abtastzeitfenster notwendig sind, um die Positionssignale sicher zu erfassen. Dies bedeutet mit anderen Worten, daß in diesem Fall die Zeitspannen des inaktiven Betriebszustands wesentlich länger und der benötigte Energiebedarf damit wesentlich vermindert ist.

Die Erfindung berücksichtigt bei der Nachlauferfassung von elektrischen Verstellmotoren, insbesondere Gleichstrommotoren, den Drehzahlabfall bei deren Abschalten. Damit ist es gleichzeitig ermöglicht, daß die Pufferkapazitäten klein gehalten werden können und daß bei gleicher Pufferkapazität größere Nachlauüberwachungszeiten möglich sind, als dies bei festen Abtastintervallen der Fall ist.

In vorteilhafter Weise wird bei dem dem ersten Ausführungsbeispiel zugrunde liegenden Verfahren die Anpassung der Abtastzeitintervalle immer nach der Detektierung eines neuen Flankenwechsels des Positionssignals durchgeführt. Bei dem dem zweiten Ausführungsbeispiel zugrunde liegenden Verfahren wird die Anpassung der Abtastzeitintervalle in alternativer vorteilhafter Weise auch ohne Flankenwechsel durch jeweilige Vergrößerung der Abtastzeitpunkte bzw. Abtastzeitintervalle durchgeführt. Besonders dieses Verfahren deckt diejenigen Fälle ab, bei denen nach Motorabschaltung oder Eintritt einer Unterspannungsbedingung, nur noch eine Flanke detektiert wird.

**Patentansprüche**

1. Nachlauferfassung von elektrischen Verstellmotoren mit inkrementaler Positionserfassung bei einem Spannungsabfall, insbesondere bei Verstellmotoren in Kraftfahrzeugen, **dadurch gekennzeichnet, daß** zur Positionserfassung ein Mikrocontroller mit Selbstweckvorrichtung vorgesehen ist, der zur Verminderung der mittleren Stromaufnahme von einem aktiven Betriebszustand (B1) in einen inaktiven Betriebszustand (B0) versetzbar ist und nach einer vorher bestimmbaren Zeitspanne, z. B. 1 ms, selbsttätig wieder in den aktiven Betriebszustand (B1) versetzbar ist, daß der Mikrocontroller die Positionssignale (HS) von Positionsgebern zu bestimmten Abtastzeitpunkten (11, 12) abfragt, daß der Mikrocontroller zwischen den notwendigen Abtastzeitpunkten für eine bestimmte, berechnete Zeitspanne, z. B. 1 ms, in den inaktiven Betriebszustand (B0) versetzt wird, und daß die bestimmte, berechnete Zeitspanne von einem detektierten Flankenwechsel des Positionssignals (HS) an berechnet wird.

2. Nachlauferfassung nach Anspruch 1, **dadurch gekennzeichnet, daß** die Berechnung der bestimmten, berechneten Zeitspanne für die der Mikrokontroller im inaktiven Betriebszustand (B0) ist, von jedem detektierten Flankenwechsel (31, 41, 44) des Positionssignals (HS) an berechnet wird, wobei berücksichtigt wird, daß das durch Abruftechnik ermittelte Positionssignalintervall aufgrund der zeitdiskreten Abtastung um ein Abtastintervall kleiner sein kann als der wirkliche Wert.

3. Nachlauferfassung nach Anspruch 1 oder 2, **dadurch gekennzeichnet, daß** die Berechnung der bestimmten, berechneten Zeitspanne für die der Mikrokontroller im inaktiven Betriebszustand (B0) ist, nach folgender Formel erfolgt:

$$t_{Sleep\_neu} =$$

$$= \left| \begin{cases} (N_{HF}-1)\,t_{Sleep\_alt} + (N_{HF}-2)\,t_{Run} & N_{HF} \geq 2 \\ \\ t_{Sleep\_alt} & N_{HF} < 2 \end{cases} \right.$$

wobei

$N_{HF}$ die Anzahl der Abtastzeitpunkte seit letztem Flankenwechsel der als Positionsgeber verwendeten Hallsensoren bedeutet,
$t_{Sleep\_neu}$ das neue Intervall, in dem der Mikrokontroller im inaktiven Betriebszustand ist,
$t_{Sleep\_alt}$ das aktuelle Intervall, in dem der Mikrokontroller im inaktiven Betriebszustand ist,
$t_{Run}$ das Intervall, in dem der Mikrokontroller im aktiven Betriebszustand ist,
bedeuten,
und angenommen ist, daß eine zweifache Abtastung erfolgt.

4. Nachlauferfassung nach Anspruch 1, **dadurch gekennzeichnet, daß** die Berechnung der bestimmten, berechneten Zeitspanne für die der Mikrokontroller im inaktiven Betriebszustand (B0) ist, derart erfolgt, daß ausgehend von einem ersten Abtastzeitpunkt (32) und einem ersten Abtastzeitintervall (33) die folgenden Abtastzeitpunkte (34, 35, 35, 37) so bestimmt werden, daß sich die nachfolgenden Abtastzeitpunkte solange verdoppeln, bis ein Flankenwechsel (41) des Positionssignals (31) detektiert wird.

5. Nachlauferfassung nach Anspruch 4, **dadurch gekennzeichnet, daß** bei demjenigen Zeitpunkt (37, 42), bei welchem der Flankenwechsel (41, 44) detektiert wird, die Prozedur der Verdopplung der Abtastzeitpunkte erneut beginnt, bis der nächste Flankenwechsel erreicht ist, wobei der Startwert für das erste Abtastzeitintervall (43) nach dem ersten Flankenwechsel (41) das vorletzte Abtastzeitintervall (39) ist.

6. Nachlauferfassung nach einem der vorigen Ansprüche, **dadurch gekennzeichnet, daß** die bestimmte, berechnete Zeitspanne, in welcher der Mikrokontroller im inaktiven Betriebszustand (B0) ist, durch Subtraktion der Zeit, die für die Erfassung der Positionssignale angenommen wird, von der Zeit des Abtastintervalls berechnet wird.

7. Nachlauferfassung nach einem der vorigen Ansprüche, **dadurch gekennzeichnet, daß** der verwendete Mikrokontroller einen niederfrequenten Oszillator besitzt, daß im Mikrokontroller eine Schaltung vorgesehen ist, die aus der niedrigen Frequenz dieses Oszillators eine wesentlich höhere Taktfrequenz für den Mikrokontrollerkern generiert, daß der Oszillator als originäres Bauelement in den Mikrokontroller mitintegriert ist, und daß eine Unterspannungserkennung vorgesehen ist, deren Ausgangssignal unmittelbar dem Mikrokontrollerkern zuführbar ist.

8. Nachlauferfassung nach Anspruch 7, **dadurch gekennzeichnet, daß** der Mikrokontroller mit einer Zeitschaltlogik versehen ist, welche nach Ablauf einer verschieden vorgebbaren Zeitspanne eine Weckschaltung beaufschlagt, damit diese den Mikrokontrollerkern von dem inaktiven (B0) in den aktiven (B1) Betriebszustand versetzt.

**Claims**

1. Run-on detection system for electric servomotors with incremental detection of position in the case of a voltage drop, in particular for servomotors in motor vehicles, **characterized in that** provided for the purpose of detecting position is a microcontroller with a self-stimulating device, which microcontroller, for the purpose of reducing the average power consumption, can be switched from an active operating state (B1) into an inactive operating state (B0) and, after a previously determinable time interval, for example 1 ms, can be automatically switched again into the active operating state (B1), **in that** the microcontroller interrogates the position signals (HS) from position transmitters at specific sampling instants (11, 12), **in that** between the required sampling instants the microcontroller is switched into the inactive operating state (B0) for a specific, calculated time interval, for example 1 ms, and **in that** the specific, calculated time interval is calculated starting from a detected edge change of the position signal (HS).

2. Run-on detection system according to Claim 1, **characterized in that** the calculation of the specific, calculated time interval for which the microcontroller is in the inactive operating state (B0) is performed starting from each detected edge change (31, 41, 44) of the position signal (HS), it being taken into account that because of the time-discrete sampling the position signal interval determined by polling technology can be smaller by one sampling interval than the actual value.

3. Run-on detection system according to Claim 1 or 2, **characterized in that** the calculation of the specific, calculated time interval for which the microcontroller is in the inactive operating state (B0) is performed using the following formula:

$$t_{Sleep\_new} = \begin{cases} (N_{HF}-1)\, t_{Sleep\_old} + (N_{HF}-2)\, t_{Run} & N_{HF} \geq 2 \\ \\ t_{Sleep\_old} & N_{HF} < 2 \end{cases}$$

in which

$N_{HF}$ signifies the number of sampling instants since the last edge change of the Hall sensors used as position transmitters,
$t_{Sleep\_new}$ signifies the new interval in which the microcontroller is in the inactive operating state,
$t_{Sleep\_old}$ signifies the current interval in which the microcontroller is in the inactive operating state,
$t_{Run}$ signifies the interval in which the microcontroller is in the active operating state,
and it is assumed that twofold sampling is performed.

4. Run-on detection system according to Claim 1, **characterized in that** the calculation of the specific, calculated time interval for which the microcontroller is in the inactive operating state (B0) is performed in such a way that, starting from a first sampling instant (32) and a first sampling time interval (33), the following sampling instants (34, 35, 36, 37) are determined such that the subsequent sampling instants are doubled until an edge change (41) of the position signal (31) is detected.

5. Run-on detection system according to Claim 4, **characterized in that**, at that instant (37, 42) at which the edge change (41, 44) is detected, the procedure of doubling the sampling instants is restarted until the next edge change is reached, the starting value for the first sampling time interval (43) after the first edge change (41) being the penultimate sampling time interval (39).

6. Run-on detection system according to one of the preceding claims, **characterized in that** the specific, calculated time interval in which the microcontroller is in the inactive operating state (B0) is calculated by subtracting the time which is assumed for detecting the position signals from the time of the sampling interval.

7. Run-on detection system according to one of the preceding claims, **characterized in that** the microcontroller used has a low-frequency oscillator, **in that** provided in the microcontroller is a circuit which generates a substantially higher clock frequency for the microcontroller core from the low frequency of this oscillator, **in that** the oscillator is co-integrated as an original component into the microcontroller, and **in that** an undervoltage detector is provided whose output signal can be fed directly to the microcontroller core.

8. Run-on detection system according to Claim 7, **characterized in that** the microcontroller is provided with a time-switching logic circuit which, after expiry of a time interval which can be variously prescribed, is applied to an_alarm circuit so that the latter switches the microcontroller core from the inactive (B0) into the active (B1) operating state.

## Revendications

1. Système de détection de poursuite de fonctionnement de moteurs électriques d'actionneurs à détection incrémentale de position en cas de chute de tension, notamment les moteurs d'actionneurs de véhicules automobiles, **caractérisé en ce que**

   - pour la détection de position il est prévu un microprocesseur à dispositif de réveil automatique qui, pour réduire la consommation moyenne de courant, peut passer d'un état de fonctionnement actif (B1) à un état de fonctionnement inactif (B0) et après une durée prédéterminée par exemple 1 ms, peut revenir automatiquement à l'état de fonctionnement actif (B1),
   - le microprocesseur interroge les signaux de position (HS) des générateurs de position à des instants de détection déterminés (11, 12),
   - le microprocesseur est mis à l'état de fonctionnement inactif (B0) entre les instants de détection nécessaires pour une période calculée, déterminée, par exemple 1 ms, et
   - la période déterminée est calculée à partir d'un changement de flanc détecté du signal de position (HS).

2. Système de détection de poursuite de fonctionnement selon la revendication 1, **caractérisé en ce que** le calcul de la période déterminée pour laquelle le microprocesseur est à l'état de fonctionnement inactif (B0) se fait à partir de chaque changement de flanc détecté (31, 41, 44) du signal de position (HS), en tenant compte du fait que l'intervalle de signal de position obtenu par la technique d'appel, sur la base de la détection discrète dans le temps, peut être inférieur à la valeur réelle, d'une différence correspondant à un intervalle de détection.

3. Système de détection de poursuite selon l'une quelconque des revendications 1 ou 2, **caractérisé en ce que**

$$t_{som.\_nouv} = \begin{cases} \left| (N_{HF}-1)\, t_{som.\_anc.} + (N_{HF}-2)\, t_{Run} \right| & N_{HF} \geq 2 \\[2em] t_{som.\_anc} & N_{HF} < 2 \end{cases}$$

   dans laquelle :

   $N_{HF}$ est le nombre de points de détection depuis le dernier changement de flanc des capteurs Hall utilisés comme générateurs de position,
   $t_{som.\_neuv}$ représente le nouvel intervalle dans lequel le microprocesseur est à l'état de fonctionnement inactif,
   $t_{som.\_anc}$ représente l'intervalle actuel dans lequel le microprocesseur est à l'état de fonctionnement inactif,
   $t_{run}$ représente l'intervalle dans lequel le microprocesseur est à l'état de fonctionnement actif, et
   on suppose qu'il y a une double détection.

4. Système de détection de poursuite selon la revendication 1, **caractérisé en ce que** le calcul de la période définie, calculée pendant laquelle le microprocesseur est à l'état de fonctionnement inactif (B0), se fait en déterminant à partir d'un premier instant de détection (32) et d'un premier intervalle de temps de détection (33), les instants de détection suivants (34, 35, 36, 37), de sorte que les instants de détection suivants doublent jusqu'à détecter un changement de flanc (41) du signal de position (31).

5. Système de détection de poursuite selon la revendication 4, **caractérisé en ce qu'**

à chaque instant (37, 42) auquel on détecte le changement de flanc (41, 44), on renouvelle la procédure de doublement des instants de détection jusqu'à atteindre le changement de flanc suivant, la valeur de départ pour le premier intervalle de temps de détection (43) après le premier changement de flanc (41) étant l'avant-dernier intervalle de temps de détection (39).

6. Système de détection de poursuite selon l'une quelconque des revendications précédentes,
   **caractérisé en ce que**
   la période calculée, déterminée, au cours de laquelle le microprocesseur est à l'état de fonctionnement inactif (B0), est calculée à partir du temps de l'intervalle de temps de détection en retranchant le temps pris pour la détection des signaux de position.

7. Système de détection de poursuite selon l'une quelconque des revendications précédentes,
   **caractérisé en ce que**
   le microprocesseur utilisé possède un oscillateur basse fréquence, et un circuit qui génère à partir de cette basse fréquence de l'oscillateur une fréquence de cadence considérablement plus élevée pour le coeur du microprocesseur, l'oscillateur étant intégré comme composant d'origine dans le microprocesseur, et un moyen de détection de sous-tension applique son signal de sortie, directement au coeur du microprocesseur.

8. Système de détection de poursuite selon la revendication 7,
   **caractérisé en ce que**
   le microprocesseur comporte une logique de commutation de temps qui, à la fin d'une durée prédéterminée différente, actionne un circuit de réveil pour que celui-ci mette le coeur du microprocesseur de son état inactif (B0) à son état de fonction actif (B1).

Fig. 1

Fig. 2

EP 0 827 603 B1

Fig. 3

Fig. 4